# EUROPEAN PATENT SPECIFICATION

(11) **EP 1 338 536 B1**
(45) Date of publication and mention of the grant of the patent: **10.05.2006**
(21) Application number: 03003293.2
(22) Date of filing: 24.02.2003
(51) Int. Cl.: B65G 47/90, B65G 47/91, B65G 59/02, B65G 61/00

(54) **Pallet unloading machine**
Vorrichtung zum Entladen von Platten
Machine de déchargement de palettes

(30) Priority: 25.02.2002 IT TO20020157
(43) Date of publication of application: 27.08.2003
(73) Proprietor: OMA S.r.l., 37069 Villafranca di Verona (IT)
(72) Inventor: Baldi, Giampietro, 37069 Villafranca Di Verona (IT)
(74) Representative: Cerbaro, Elena

(56) References cited:
- EP-A- 1 044 905
- DE-A- 3 511 531

## Description

The present invention relates to a pallet unloading machine.

More specifically, the present invention relates to a machine for unloading pallets of glass bottles or similar, to which the following description refers purely by way of example. What is stated in the following description, in fact, may also apply to other types of containers, such as jars and similar.

As is known, in the packing machine industry, there are numerous types of pallet unloading machines for receiving a "pallet of bottles" at the input, and supplying, at the output, a succession of loose bottles ready for supply to other machines.

"Pallets of bottles" are defined by a given number of layers of bottles stacked on a platform to form, when packed, a single, easy-to-carry block; and each layer of bottles is defined by a given number of parallel, adjacent rows of bottles on a supporting tray or panel resting on the layer of bottles underneath.

Most known machines for unloading pallets of bottles comprise: a loading platform on which the pallet for unloading is positioned; a product accumulating surface alongside the loading platform; and an unloading head fitted movably to a supporting frame, and which moves over the loading platform and accumulating surface to remove a predetermined number of rows of bottles off the top of the pallet on the loading platform, and to deposit the rows of bottles onto the accumulating surface adjacent to the loading platform.

Pallet unloading machines of the above type also comprise a supporting tray or panel pickup device for removing each supporting tray off the top of the pallet as soon as the corresponding layer of bottles has been unloaded onto the product accumulating surface.

The tray pickup device normally comprises a horizontal transverse supporting member mounted to move vertically on the supporting frame alongside the loading platform and parallel to one side of the pallet; a swing arm projecting perpendicularly from and fitted to the horizontal transverse supporting member to rotate, about a horizontal axis, in a vertical plane perpendicular to the horizontal transverse supporting member and the supporting tray on top of the pallet; and a gripper-type gripping member fixed to the free end of the swing arm to grip, on command, a portion of the supporting tray on top of the pallet. A known pallet unloading machine according to the preamble of claim 1 is disclosed in document EP-A-1 044 905.

Bulk and cost are major drawbacks preventing pallet unloading machines of the above type from being used in small-scale bottling or canning plants : known tray pickup devices, in fact, are relatively complicated and expensive, and, to operate properly, need a large amount of manoeuvring space which limits the extent to which the overall size of the machine can be reduced.

It is an object of the present invention to provide a pallet unloading machine designed to eliminate the aforementioned drawbacks.

According to the present invention, there is provided a pallet unloading machine for unloading a pallet of products and supplying a succession of loose products according to claim 1.

A non-limiting embodiment of the present invention will be described by way of example with reference to the accompanying drawings, in which:
Figure 1 shows a plan view, with parts in section and parts removed for clarity, of a pallet unloading machine in accordance with the teachings of the present invention;
Figure 2 shows a side view, with parts removed for clarity, of the Figure 1 pallet unloading machine;
Figure 3 shows a larger-scale view, with parts in section and parts removed for clarity, of a component part of the Figure 1 and 2 pallet unloading machine;
Figure 4 shows a plan view, with parts removed for clarity, of the Figure 3 component part of the pallet unloading machine.

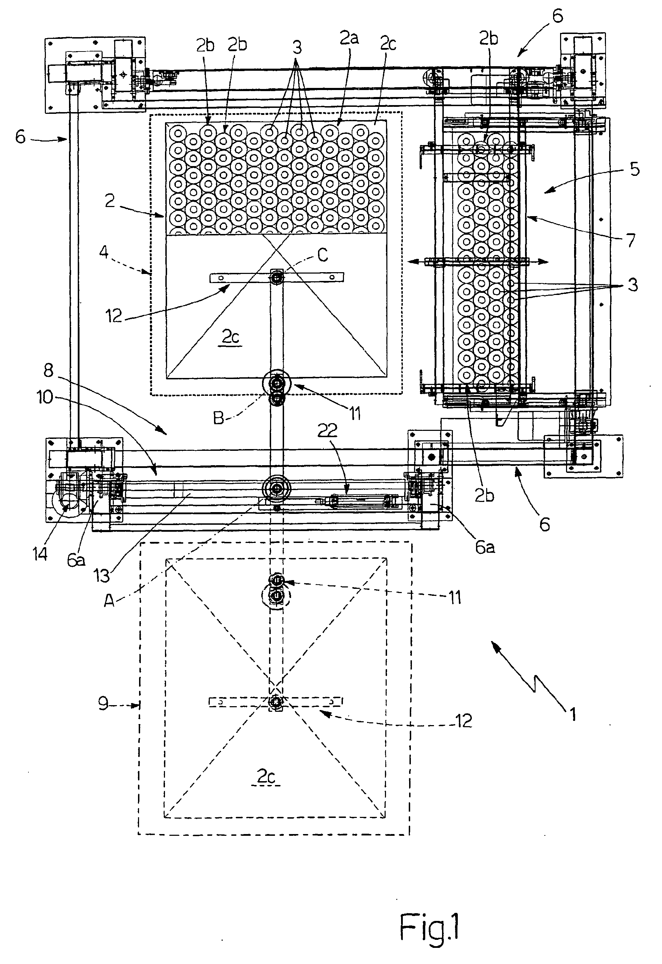

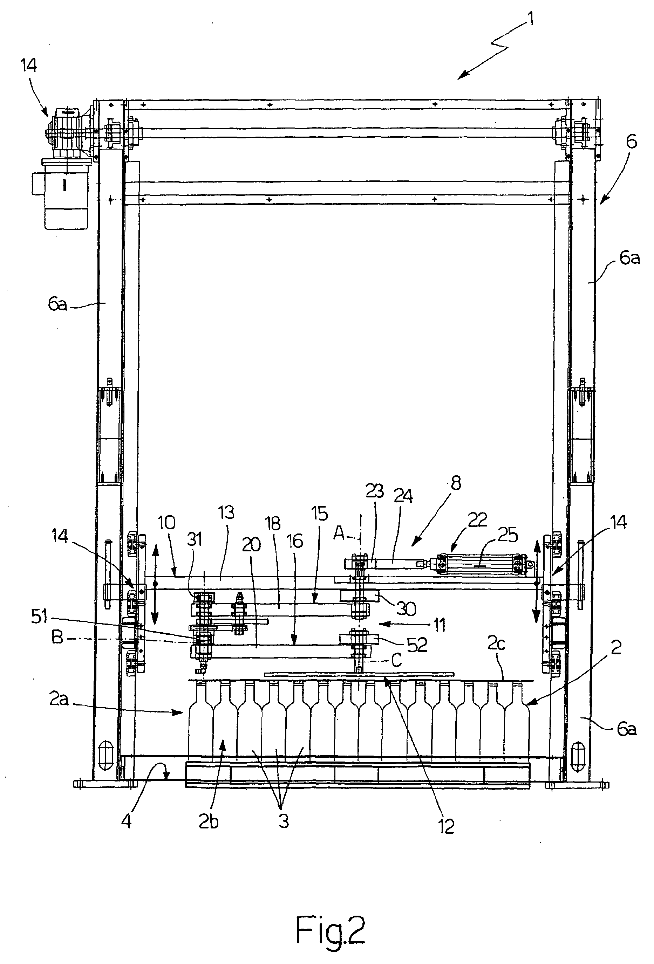

Number 1 in Figures 1 and 2 indicates as a whole a pallet unloading machine for automatically or semiautomatically unloading a pallet 2 of products, and supplying a succession of loose products ready for use on other machines.

In the example shown, specific reference is made to a pallet unloading machine 1 for automatically or semiautomatically unloading a pallet 2 of bottles 3, and supplying a succession of loose bottles 3 ready for use on other machines.

Like any other "pallet of products", pallets 2 of bottles are defined by a compact, orderly group of bottles 3, which in turn is defined by a number of bottle layers 2a stacked on a platform to form, when packed, a single, easy-to-carry block. Each bottle layer 2a is in turn defined by a given number of bottle rows 2b arranged parallel and adjacent to one another, and preferably, though not necessarily, in a five-spot pattern, on a supporting tray or panel 2c resting on the adjacent bottle layer 2a underneath.

In the particular example shown, pallet 2 is defined by four superimposed bottle layers 2a, each defined by fourteen bottle rows 2b arranged in a five-spot pattern on a corresponding supporting tray or panel 2c; and each bottle row 2b comprises fifteen bottles 3.

With reference to Figures 1 and 2, pallet unloading machine 1 comprises: a loading platform 4 on which pallet 2 for unloading is positioned; a product accumulating surface 5 alongside loading platform 4; a supporting frame 6 astride loading platform 4 and product accumulating surface 5; and an unloading head 7 for successively removing a given number of bottle rows 2b off the top of pallet 2 on loading platform 4, and depositing bottle rows 2b onto product accumulating surface 5 adjacent to loading platform 4.

More specifically, unloading head 7 is fitted movably to frame 6 so as to move freely both horizontally and vertically over loading platform 4 and product accumulating surface 5, and selectively grips and retains a predetermined number of bottle rows 2b forming any bottle layer 2a in pallet 2, so as to transfer said predetermined number of rows 2b of bottles 3 successively off the top of pallet 2 on loading platform 4 onto product accumulating surface 5.

In the example shown, at each pass from the top of pallet 2 on loading platform 4 to product accumulating surface 5, unloading head 7 transfers fewer than the total number of bottle rows 2b defining each bottle layer 2a in pallet - in the example shown, four rows.

Pallet unloading machine 1 also comprises a supporting tray or panel pickup device 8 for selectively removing each supporting tray 2c off the top of pallet 2 on loading platform 4, as soon as the bottle rows 2b in the corresponding bottle layer 2a have all been transferred onto product accumulating surface 5, and for depositing supporting tray 2c in a store or collecting bin 9 alongside loading platform 4.

With reference to Figures 1, 2, 3 and 4, pickup device 8 comprises: a supporting member 10 fitted, so as to move vertically, to supporting frame 6 alongside loading platform 4; a pantograph-type articulated arm 11 fixed to and projecting from supporting member 10 so as to move pantograph-fashion in a given horizontal plane; and a gripping member 12 fixed to the free end of articulated arm 11 to grip and retain, on command, the supporting tray 2c on top of pallet 2 on loading platform 4.

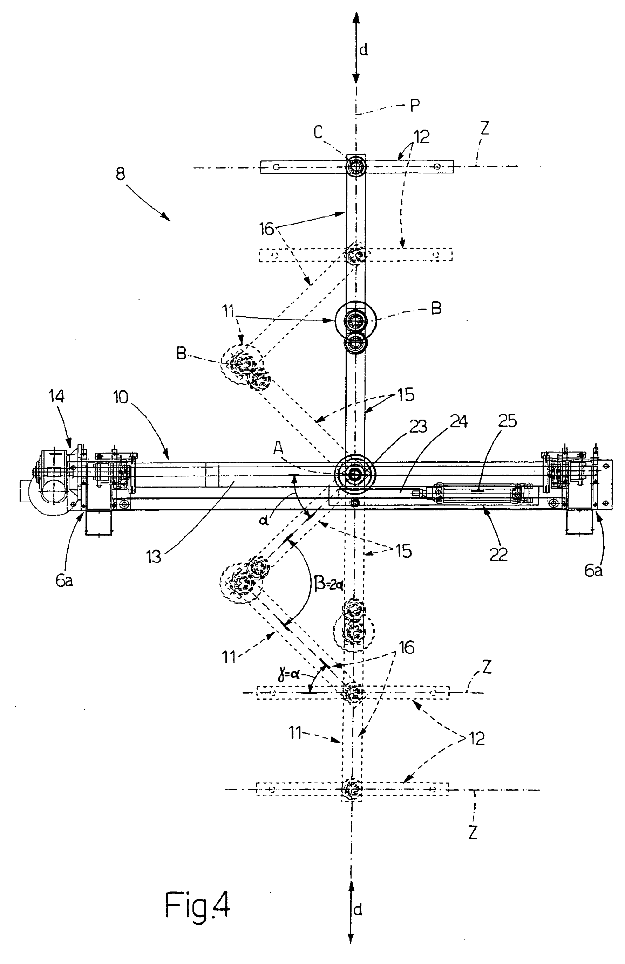

With reference to Figures 2 and 4, in the example shown, supporting member 10 comprises a horizontal cross member 13 extending alongside loading platform 4, parallel to and facing one side of pallet 2 on loading platform 4, and each axial end of which is mounted to slide along a respective upright 6a of supporting frame 6; and a known actuating mechanism 14 for moving horizontal cross member 11, on command, along the two uprights 6a of supporting frame 6, while keeping it horizontal at all times.

With reference to Figures 2, 3 and 4, pantograph-type articulated arm 11 comprises: a first horizontal half-arm - hereinafter indicated 15 - fitted to the body of horizontal cross member 13 so as to rotate with respect to it about a vertical axis A; a second horizontal half-arm - hereinafter indicated 16 - fitted to the free end of half-arm 15 so as to rotate freely with respect to it about an axis B parallel to axis A; and cascade gearing 17 for transmitting the rotation of half-arm 15 about axis A to the body of half-arm 16, so that the body of half-arm 16 is forced to rotate about axis B in the opposite direction to, and at an angular speed proportional to that of, rotation of half-arm 15 about axis A.

In other words, cascade gearing 17 transmits the rotation of half-arm 15 about axis A to the body of half-arm 16 to coordinate scissor opening of half-arms 15 and 16 with the rotation of half-arm 15 about axis A.

Half-arms 15 and 16 are positioned horizontally one above the other, and gripping member 12 is fixed beneath half-arm 16, at a distance l₂ from axis B equal to the distance l₁ between axis A and axis B.

More specifically, in the example shown, gripping member 12 is fixed to the body of half-arm 16, so as to project beneath half-arm 16 coaxially with a third axis C, which is parallel to axes A and B and located at a distance l₂ from axis B equal to the distance l₁ between axes A and B.

Cascade gearing 17 transmits motion from one half-arm to the other with a gear ratio of two to one, so that the angular speed at which half-arm 16 rotates about axis B with respect to half-arm 15 is always twice the angular speed at which half-arm 15 rotates about axis A with respect to supporting member 10.

Given the equal "useful lengths" or distances between the axes of half-arms 15 and 16, i.e. the equal distances l₁ and l₂ between axes A, B and C, and the particular gear ratio of cascade gearing 17, scissor opening of half-arms 15 and 16 can be coordinated with rotation of half-arm 15 about axis A so that rotation of half-arm 15 about axis A produces a linear movement of gripping member 12 in a horizontal direction d, and along a vertical reference plane P stationary in space and containing both axes A and C.

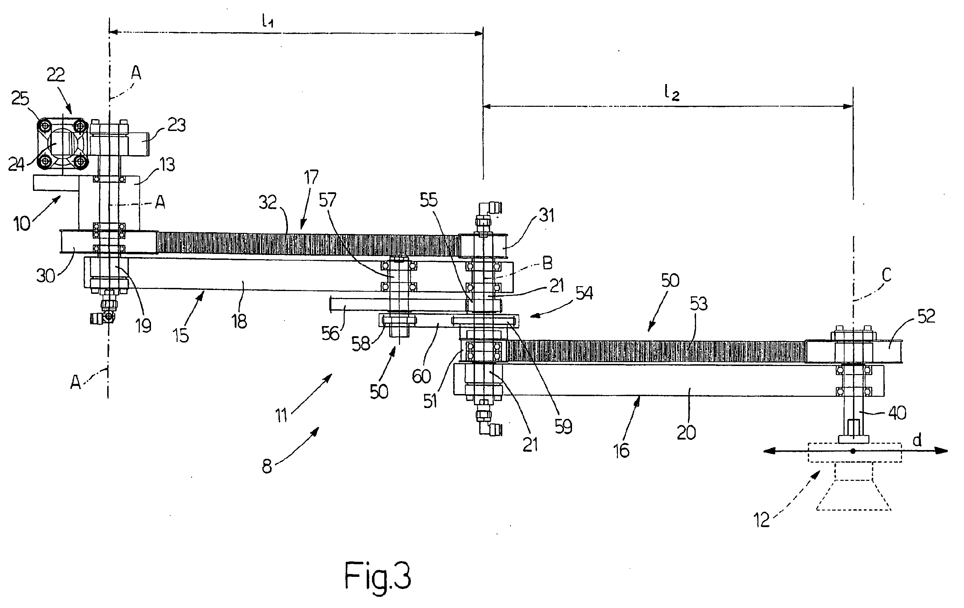

With reference to Figures 3 and 4, in the example shown, half-arm 15 is defined by a supporting beam 18 of appropriate section, which is hinged to horizontal cross member 13 by a cylindrical through pin 19 extending, coaxially with axis A, through the body of supporting beam 18 and horizontal cross member 13. Cylindrical pin 19 of half-arm 15 is fitted rigidly to one end of supporting beam 18, and is fitted in rotary manner to the body of horizontal cross member 13 by the interposition of appropriate known rolling bearings.

Like half-arm 15, half-arm 16 is defined by a supporting beam 20 of appropriate section, which is hinged to the body of half-arm 15 by a cylindrical through pin 21 extending, coaxially with axis B, through the body of supporting beam 20 and the body of supporting beam 18. Cylindrical pin 21 of half-arm 16 is fitted rigidly to one end of supporting beam 20, and is fitted in rotary manner to the body of supporting beam 18 by the interposition of appropriate known rolling bearings.

With reference to Figures 2, 3 and 4, articulated arm 11 obviously also comprises an actuating mechanism 22 for rotating cylindrical pin 19, on command, about axis A, and so moving half-arm 15 about axis A and half-arm 16 about B to open articulated arm 11 scissor-fashion.

In the example shown, actuating mechanism 22 comprises a gear 23 fitted to one end of cylindrical pin 19 projecting above horizontal cross member 13; a horizontal rack 24 meshing with gear 23; and a double-acting linear pneumatic actuator 25 for moving rack 24, on command, along its horizontal axis, so as to rotate gear 23, and everything connecting to it, about axis A.

More specifically, the travel of linear actuator 25 and the dimensions of rack 24 are so calculated as to rotate cylindrical pin 19 clockwise or anticlockwise about axis A by a variable angle preferably, though not necessarily, ranging between 0° and 90°, as of a predetermined reference angular position wherein half-arms 15 and 16 are positioned parallel and facing each other (Figure 2).

With reference to Figure 4, maximum 90° clockwise or anticlockwise rotation of cylindrical pin 19 opens half-arms 15 and 16 scissor-fashion, so that articulated arm 11 is gradually extended on one side or the other of horizontal cross member 13 to move gripping member 12, in horizontal direction d on one side or the other of horizontal cross member 13, from a parking position (Figure 2), in which gripping member 12 is located perfectly beneath cylindrical pin 19 (axes A and C coincide), to a maximum distance from horizontal cross member 13 equal to the sum of the "useful lengths" or distances between the axes of half-arms 15 and 16, i.e. twice length l₁ or l₂.

It should be pointed out that articulated arm 11 is set to the parking position when half-arms 15 and 16 are positioned facing and perfectly parallel, one beneath the other (Figure 2), i.e. when cylindrical pin 19 is in said predetermined reference angular position. In the example shown, since half-arms 15 and 16 in the parking position (Figure 2) are parallel to the longitudinal axis of horizontal cross member 13, the vertical reference plane P along which gripping member 12 moves is perpendicular to the longitudinal axis of horizontal cross member 13.

Actuating mechanism 22 of articulated arm 11 may obviously also be defined by a conventional electric step motor with position control of the shaft, or by a known connecting rod-crank mechanism.

With reference to Figures 3 and 4, in the example shown, cascade gearing 17 synchronizing movement of half-arm 16 about axis B and movement of half-arm 15 about axis A comprises: a main toothed pulley 30 fitted in rotary manner to cylindrical pin 19 of half-arm 15, between horizontal cross member 13 and supporting beam 18; a secondary toothed pulley 31 fitted rigidly to the end of cylindrical pin 21 of half-arm 16, on the opposite side to supporting beam 20; and a toothed drive belt 32 looped about toothed pulleys 30 and 31.

Toothed pulley 30 is fixed rigidly to the body of horizontal cross member 13, and has an outside diameter which is twice that of toothed pulley 31, which is thus forced to rotate about axis B at twice the angular speed of toothed pulley 30.

With reference to Figures 2, 3 and 4, in the example shown, gripping member 12 is fixed to the free end of articulated arm 11 by a cylindrical fastening pin 40, which projects, coaxially with axis C, from the free end of supporting beam 20 of half-arm 16.

More specifically, cylindrical fastening pin 40 of articulated arm 11 is fitted in rotary manner inside the body of supporting beam 20 by the interposition of known rolling bearings, and has a flanged end to which gripping member 12 is fixed.

According to the invention, articulated arm 11 has second cascade gearing 50 for transmitting to cylindrical fastening pin 40, with a predetermined gear ratio, rotation about axis B of half-arm 16 with respect to half-arm 15, so that cylindrical fastening pin 40 rotates about axis C inside half-arm 16 in the opposite direction to, and at half the angular speed of, rotation of cylindrical pin 21 about axis B in half-arm 15.

When parting half-arms 15 and 16, i.e. when extending articulated arm 11, cascade gearing 50 therefore rotates cylindrical fastening pin 40 about axis C inside supporting beam 20 in opposite manner with respect to half-arm 16, so as to compensate for rotation of half-arm 16 about axis B. More specifically, cascade gearing 50 rotates cylindrical fastening pin 40 with respect to half-arm 16, which in turn rotates and translates so that, to an observer, cylindrical fastening pin 40 and gripping member 12 integral with it move in a straight line in direction d at all times, with no rotation about axis C.

That is, assuming gripping member 12 has a horizontal reference axis Z parallel to the longitudinal axis of horizontal cross member 13 when articulated arm 11 is in the parking position (Figure 2), cascade gearing 50 rotates cylindrical fastening pin 40 inside half-arm 16, so that, as articulated arm 11 is extended, the horizontal reference axis Z of gripping member 12 is maintained perfectly parallel at all times to the longitudinal axis of horizontal cross member 13.

In a first embodiment not shown, cascade gearing 50 is substantially the same as cascade gearing 17, and comprises: a main toothed pulley fitted in rotary manner to cylindrical pin 21 of half-arm 16, between supporting beam 18 and supporting beam 20; a secondary toothed pulley fitted rigidly to the end of cylindrical fastening pin 40, on the opposite side to gripping member 12; and a toothed drive belt looped about said two toothed pulleys.

The main toothed pulley is fixed rigidly to the body of supporting beam 18, and has an outside diameter which is half that of the secondary toothed pulley, which is thus forced to rotate about axis C at half the angular speed of the secondary toothed pulley.

With reference to Figure 3, in a second embodiment, cascade gearing 50 comprises: a main toothed pulley 51 fitted in rotary manner to cylindrical pin 21 of half-arm 16, between supporting beam 18 and supporting beam 20; a secondary toothed pulley 52 fitted rigidly to the end of cylindrical fastening pin 40 of half-arm 16, on the opposite side to the flanged end; a toothed drive belt 53 looped about toothed pulleys 51 and 52; and a reduction gear 54 for transmitting rotation of cylindrical pin 21 about axis B to toothed pulley 51 with a given gear ratio.

More specifically, reduction gear 54 transmits rotation of cylindrical pin 21 to toothed pulley 51, so that toothed pulley 51 in turn rotates cylindrical fastening pin 40 about axis C with respect to half-arm 16 at half the angular speed at which cylindrical pin 21 rotates about axis B with respect to half-arm 15.

In the example shown, reduction gear 54 comprises: a first gear 55 fitted rigidly to cylindrical pin 21 of half-arm 16, just below supporting beam 18; a second gear 56 fitted to a freely rotating shaft 57 fitted to supporting beam 18, alongside and parallel to cylindrical pin 21; a third gear 58 fitted to shaft 57, just below gear 56; and a freely rotating fourth gear 59 fitted to cylindrical pin 21 of half-arm 16, just above toothed pulley 51.

Gear 55 meshes with gear 56, which in turn rotates gear 58; and gear 59 is angularly integral with toothed pulley 51, and is connected mechanically to gear 58 by a drive chain 60 looped about gears 58 and 59.

As stated, the gear ratio of gears 55 and 56, the gear ratio of gears 58 and 59, and the gear ratio of toothed pulleys 51 and 52, are obviously such that cascade gearing 50 as a whole rotates cylindrical fastening pin 40 about axis C with respect to half-arm 16 at half the angular speed at which cylindrical pin 21 rotates about axis B with respect to half-arm 15.

In the example shown, gripping member 12 comprises a horizontal beam extending coaxially with axis Z; and a number of downward-facing suction cups fixed to the underside of the beam. The suction cups are connected in known manner to a suction unit, which, on command and when the suction cups are placed on the supporting tray 2c on top of pallet 2 on loading platform 4, creates a vacuum in the closed gap between the suction cup head and the tray, so that the tray adheres integrally to gripping member 12.

Operation of pallet unloading machine 1 can easily be deduced from the foregoing description with no further explanation required.

As for supporting tray or panel pickup device 8, when, as shown in Figure 4, actuating mechanism 22 rotates half-arm 15 about axis A by an angle , cascade gearing 17 rotates half-arm 16 about axis B with respect to half-arm 15 by an angle β equal to twice angle (β=2), and cascade gearing 50 rotates cylindrical fastening 40 inside half-arm 16 about axis C by an angle γ equal to angle α (γ=α).

In other words, articulated arm 11 moves gripping member 12 in direction d, while maintaining the body of gripping member 12 parallel to itself at all times.

Pickup device 8 therefore transfers supporting trays 2c from the top of pallet 2 on loading platform 4 to store or collecting bin 9, while keeping them perfectly horizontal and parallel to themselves.

The particular structure of articulated arm 11, in fact, enables gripping member 12 to be moved from one side to the other of horizontal cross member 13, so as to position gripping member 12 selectively and alternately over the top of pallet 2 on loading platform 2, or over supporting tray store or collecting bin 9, which, in this case, is located on the opposite side of horizontal cross member 13 to loading platform 4.

The advantages of pallet unloading machine 1 as described above are obvious: the particular structure of tray pickup device 8 drastically reduces the manoeuvring space required to transfer supporting trays 2c from the top of pallet 2 to the store or collecting bin, thus enabling further reduction in the overall size of the machine.

Another advantage of the actuating system of gripping member 12 lies in articulated arm 11 being controlled solely by linear pneumatic actuator 25, with no additional actuating means required, thus greatly simplifying the control system of the machine.

Clearly, changes may be made to pallet unloading machine 1 as described and illustrated herein without, however, departing from the scope of the present invention as described in the appended claims.

In particular, the whole defined by supporting member 10, movable vertically on supporting frame 6 alongside loading platform 4, and articulated arm 11 may be used to support and move in space unloading head 7 as opposed to gripping member 12.

## Claims

1. A pallet unloading machine (1) for unloading a pallet (2) of products and supplying a succession of loose products (3); the pallet unloading machine (1) comprising a loading platform (4), on which the pallet (2) for unloading is positioned, a supporting frame (6) astride said loading platform (4), a supporting member (10) mounted to move vertically on said supporting frame (6) alongside the loading platform (4), an arm fixed to and projecting from said supporting member (10); and gripping means (7, 12) fixed to said arm;
said pallet unloading machine (1) being **characterized in that** said arm is a pantograph-type articulated arm (11) which comprises a first half-arm (15) fitted in rotary manner to the body of said supporting member (10) so as to rotate with respect to the supporting member about a first axis (A) of rotation, a second half-arm (16) fitted in rotary manner to the body of said first half-arm (15) so as to rotate with respect to the first half-arm about a second axis (B) of rotation parallel to said first axis (A), and first cascade gearing (17) for transmitting rotation of the first half-arm (15) about the first axis (A) to the second half-arm (16) so that the body of said second half-arm (16) is forced to rotate about the second axis (B) at twice the angular speed of, and in the opposite direction to, rotation of the first half-arm (15) about the first axis (A), so as to coordinate scissor opening of said half-arms (15, 16) with rotation of the first half-arm (15) about the first axis (A) of rotation;
said second half-arm (16) being also provided with a fastening pin (40) to which said gripping means (7, 12) are fixed; said fastening pin (40) being fitted to the body of said second half-arm (16) so as to rotate about a third axis (C) of rotation parallel to said first (A) and said second (B) axis and the distance (l₁) between said first (A) and said second (B) axis being equal to the distance (l₂) between said second (B) and said third (C) axis of rotation;
said pantograph-type articulated arm (11) also comprising a second cascade gearing (50) for transmitting to said fastening pin (40), with a predetermined gear ratio, rotation of said second half-arm (16) about the second axis (B) with respect to said first half-arm (15), so that said fastening pin (40) rotates on said second half-arm (16) about said third axis (C) in the opposite direction to, and at half the angular speed of, rotation of the second half-arm (16) about the second axis (B).

2. A pallet unloading machine as claimed in Claim 1, **characterized in that** said pantograph-type articulated arm (11) comprises an actuating mechanism (22) for rotating the first half-arm (15), on command, about said first axis (A) of rotation.

3. A pallet unloading machine as claimed in Claim 1 or 2, **characterized in that** said first (15) and said second (16) half-arm are positioned horizontally one over the other, and said first axis (A) of rotation is vertical.

4. A pallet unloading machine as claimed in any one of the foregoing Claims, **characterized in that** said first half-arm (15) comprises a supporting beam (18) hinged to the supporting member (10) by a cylindrical through pin (19) extending, coaxially with said first axis (A), through the body of the supporting beam (18) and of the supporting member (10); said cylindrical pin (19) being fitted rigidly to one end of said supporting beam (18), and being fitted in rotary manner to the body of said supporting member (10).

5. A pallet unloading machine as claimed in any one of the foregoing Claims, **characterized in that** said second half-arm (16) comprises a supporting beam (20) hinged to the body (18) of the first half-arm (15) by a cylindrical through pin (21) extending, coaxially with said second axis (B), through the body of the supporting beam (20) and the body (18) of the first half-arm (15) ; said cylindrical pin (21) being fitted rigidly to one end of said supporting beam (20), and being fitted in rotary manner to the body (18) of the first half-arm (15); said fastening pin (40) being fitted for rotation inside said supporting beam (20).

6. A pallet unloading machine as claimed in Claim 5, **characterized in that** said first cascade gearing (17) comprises a main toothed pulley (30) fitted in rotary manner to cylindrical pin (19) of said first half-arm (15), a secondary toothed pulley (31) fitted rigidly to the end of cylindrical pin (21) of said second half-arm (16), and a toothed drive belt (32) looped about said main (30) and secondary (31) toothed pulleys; main toothed pulley (30) being fixed rigidly to said supporting member (10) and having an outside diameter which is twice that of said secondary toothed pulley (31).

7. A pallet unloading machine as claimed in Claim 5 or 6, **characterized in that** said second cascade gearing (50) comprises a main toothed pulley (51) fitted in rotary manner to cylindrical pin (21) of said second half-arm (16), a secondary toothed pulley (52) fitted rigidly to the end of said fastening pin (40), a toothed drive belt (53) looped about said main (51) and secondary (52) toothed pulleys, and a reduction gear (54) for transmitting rotation of cylindrical pin (21) of said second half-arm (16) about said second axis (B) to main toothed pulley (51) with a given gear ratio.

8. A pallet unloading machine as claimed in any one of the foregoing Claims, **characterized by** also comprising a product accumulating surface (5) alongside said loading platform (4) ; and an unloading head (7) for successively removing a predetermined number of rows of products (2b) off the top of the pallet (2) on the loading platform (4), and then depositing said rows of products (2b) onto the product accumulating surface (5).

9. A pallet unloading machine as claimed in any one of the foregoing Claims, **characterized in that** said gripping means (7, 12) fixed to the pantograph-type articulated arm (11) comprise a gripping member (12) for gripping the supporting trays or panels (2c) forming part of each layer of said pallet (2).

## Patentansprüche

1. Palettenentladevorrichtung (1) zum Entladen einer Palette (2) von Produkten und zum Liefern einer Folge von losen Produkten (3), wobei die Palettenentladevorrichtung (1) eine Ladeplattform (4), an der die Palette (2) zum Entladen angeordnet ist, einen Tragrahmen (6), der rittlings der Ladeplattform (4) vorgesehen ist, ein Tragelement (10), das am Tragrahmen 85) zur vertikalen Bewegung längsseits der Ladeplattform (4) vorgesehen ist, einen Arm, der am Tragelement (10) befestigt ist und von diesem wegsteht, und Greifeinrichtungen (7 12) aufweist, die an dem Arm befestigt sind,
**dadurch gekennzeichnet,**
**dass** der Arm ein storchenschnabelartiger Gelenkarm (11) ist, der einen ersten Halbarm (15), der drehbar am Körper des Tragelementes (10) angebracht ist, um sich in Bezug zum Tragelement um eine erste Drehachse (A) zu drehen, einen zweiten Halbarm (16), der drehbar am Körper des ersten Halbarms (15) angebracht ist, um sich in Bezug zum ersten Halbarm um eine zur ersten Drehachse (A) parallele zweite Drehachse (B) zu drehen, und ein erstes Kaskadengetriebe (17) aufweist, das zum Übertragen der Drehung des ersten Halbarms (15) um die erste Achse (A) zum zweiten Halbarm (16) vorgesehen ist, so dass der Körper des zweiten Halbarms (16) sich um die zweite Achse (B) mit der doppelten Winkelgeschwindigkeit und in entgegengesetzter Richtung der Drehung des ersten Halbarms (15) um die erste Achse (A) dreht, um die Scherenöffnung der Halbarme (15, 16) mit der Drehung des ersten Halbarms (15) um die erste Drehachse (A) zu koordinieren,
**dass** der zweite Halbarm (16) außerdem mit einem Befestigungsstift (40) versehen ist, an dem die Greifeinrichtungen (7, 12) befestigt sind, wobei der Befestigungsstift (40) am Körper des zweiten Halbarms (16) angebracht ist, um sich um eine dritte Drehachse (C) zu drehen, die zur ersten und zur zweiten Achse (A, B) parallel ist, und der Abstand (l₁) zwischen der ersten und der zweiten Achse (A, B) gleich ist dem Abstand (l₂) zwischen der zweiten und der dritten Drehachse (B, C),
**dass** der storchenschnabelartige Gelenkarm (11) außerdem ein zweites Kaskadengetriebe (50) aufweist, das zum Übertragen der Drehung des zweiten Halbarms (16) um die zweite Achse (B) in Bezug zum ersten Halbarm (15) zum Befestigungsstift (40) mit einer bestimmten Getriebeübersetzung vorgesehen ist, so dass der Befestigungsstift (40) am zweiten Halbarm (16) um die dritte Achse (C) mit der halben Winkelgeschwindigkeit der Drehung des zweiten Halbarms (16) um die zweite Achse (B) und in entgegengesetzter Drehrichtung rotiert.

2. Palettenentladevorrichtung nach Anspruch 1,
**dadurch gekennzeichnet ,**
**dass** der storchenschnabeiartige Gelenkarm (11) einen Betätigungsmechanismus (22) zur Drehung des ersten Halbarms (15), auf Befehl, um die erste Drehachse (A) aufweist.

3. Palettenentladevorrichtung nach Anspruch 1 oder 2,
**dadurch gekennzeichnet ,**
**dass** der erste und der zweite Halbarm (15, 16) horizontal übereinander angeordnet sind, und die erste Drehachse (A) vertikal orientiert ist.

4. Palettenentladevorrichtung nach einem der vorhergehenden Ansprüche,
**dadurch gekennzeichnet,**
**dass** der erste Halbarm (15) einen Tragbalken (18) aufweist, der an das Tragelement (10) durch eine zylindrischen Durchsteckstift (19) angelenkt ist, der sich koaxial zur ersten Achse (A) durch den Körper des Tragbalkens (18) und des Tragelementes (10) erstreckt, wobei der zylindrische Stift (19) an einem Ende des Tragbalkens (18) fest und am Körper des Tragelementes (10) drehbar angebracht ist.

5. Palettenentladevorrichtung nach einem der vorhergehenden Ansprüche,
**dadurch gekennzeichnet,**
**dass** der zweite Halbarm (16) einen Tragbalken (20) aufweist, der an den Körper (18) des ersten Halbarms (15) durch einen zylindrischen Durchsteckstift (21) angelenkt ist, der sich koaxial zur zweiten Achse (B) durch den Körper des Tragbalkens (20) und den Körper (18) des ersten Halbarms (15) erstreckt, wobei der zylindrische Stift (21) an einem Ende des Tragbalkens (20) fest und am Körper (18) des ersten Halbarms (15) drehbar angebracht ist, wobei der Befestigungsstift (40) zur Drehung im Inneren des Tragbalkens (20) angebracht ist.

6. Palettenentladevorrichtung nach Anspruch 5,
**dadurch gekennzeichnet ,**
**dass** das erste Kaskadengetriebe (17) eine gezahnte Hauptrolle (30), die am zylindrischen Stift (19) des ersten Halbarms (15) drehbar angebracht ist, eine zweite gezahnte Rolle (31), die fest am Ende des zylindrischen Stiftes (21) des zweiten Halbarms (16) angebracht ist, und einen gezahnten Antriebsriemen (32) aufweist, der um die gezahnte Hauptrolle (30) und um die zweite gezahnte Rolle (31) herumgeschlungen ist, wobei die gezahnte Hauptrolle (30) am Tragelement (10) fest angebracht ist und einen Außendurchmesser besitzt, der doppelt so groß ist, wie der der zweiten gezahnten Rolle (31).

7. Palettenentladevorrichtung nach Anspruch 5 oder 6,
**dadurch gekennzeichnet,**
**dass** das zweite Kaskadengetriebe (50) eine gezahnte Hauptrolle (51), die am zylindrischen Stift (21) des zweiten Halbarms (16) drehbar angebracht ist, eine zweite gezahnte Rolle (52), die am Ende des Befestigungsstiftes (40) fest angebracht ist, einen gezahnten Antriebsriemen (53), der um die gezahnte Hauptrolle (51) und um die zweite gezahnte Rolle (52) herumgeschlungen ist, und eine Reduktionsgetriebe (54) aufweist, das zum Übertragen der Drehung des zylindrischen Stiftes (21) des zweiten Halbarms (16) um die zweite Achse (B) zur gezahnte Hauptrolle (51) mit einer bestimmten Getriebeübersetzung vorgesehen ist.

8. Palettenentladevorrichtung nach einem der vorhergehenden Ansprüche,
**dadurch gekennzeichnet ,**
**dass** sie außerdem längsseits der Ladeplattform (4) eine Produktsammeloberfläche (5) und einen Entladekopf (7) aufweist, der zum aufeinanderfolgenden Entladen einer bestimmten Anzahl von Reihen von Produkten (2b) von der Oberseite der Palette (2) auf die Ladeplattform (4) und zur anschließenden Anordnung dieser Reihen von Produkten (2b) auf der Produktsammeloberfläche (5) vorgesehen ist.

9. Palettenentladevorrichtung nach einem der vorhergehenden Ansprüche,
**dadurch gekennzeichnet,**
**dass** die am storchenschnabelartigen Gelenkarm (11) befestigten Greifeinrichtungen (7, 12) ein Greifelement (12) aufweisen, das zum Greifen der Tragböden oder Paneele (2c) vorgesehen ist, die ein Teil jeder Lage der Palette (2) bilden.

## Revendications

1. Dépalettiseur (1) permettant de décharger une palette (2) de produits et de délivrer une suite de produits libres (3) ; le dépalettiseur (1) comprenant une plate-forme de chargement (4) sur laquelle est positionnée la palette (2) permettant le déchargement, un châssis de support (6) à califourchon sur ladite plate-forme de chargement (4), un élément de support (10) monté de manière à se déplacer verticalement sur ledit châssis de support (6) le long de la plate-forme de chargement (4), un bras fixé et faisant saillie par rapport audit élément de support (10) et des moyens de préhension (7, 12) fixés audit bras ;
ledit dépalettiseur (1) étant **caractérisé en ce que** ledit bras est un bras articulé (11) de type pantographe qui comprend un premier demi-bras (15) adapté de manière rotative au corps dudit élément de support (10) de manière à tourner par rapport à l'élément de support autour d'un premier axe (A) de rotation, un deuxième demi-bras (16) adapté de manière rotative au corps du premier demi-bras (15) de manière à tourner par rapport au premier demi-bras autour d'un deuxième axe (B) de rotation parallèlement au premier axe (A), et un premier engrenage en cascade (17) permettant de transmettre la rotation du premier demi-bras (15) autour du premier axe (A) au deuxième demi-bras (16), de telle sorte que le corps dudit demi-bras (16) est forcé à tourner autour du deuxième axe (B) à deux fois la vitesse angulaire de, dans le sens opposé de la rotation du premier demi-bras (15) autour du premier axe (A), de manière à coordonner l'ouverture en ciseaux desdits demi-bras (15, 16) avec la rotation du premier demi-bras (15) autour de l'axe (A) de rotation ;
ledit deuxième demi-bras (16) est également doté d'une broche de fixation (40) à laquelle sont fixés lesdits moyens de préhension (7, 12) ; ladite broche de fixation (40) étant adaptée au corps dudit deuxième demi-bras (16) de manière à tourner autour d'un troisième axe (C) de rotation parallèle auxdits premier (A) et dit deuxième (B) axes, et la distance (l₁) entre lesdits premier (A) et dit deuxième (B) axes étant égale à la distance (l₂) entre lesdits deuxième (B) et dit troisième (C) axes de rotation ;
ledit bras articulé de type pantographe (11) comprenant également un deuxième engrenage en cascade (50) permettant de transmettre à ladite broche de fixation (40), avec un rapport d'engrenage prédéterminé, la rotation dudit deuxième demi-bras (16) autour du deuxième axe (B) par rapport audit premier demi-bras (15), de telle sorte que ladite broche de fixation (40) tourne sur ledit deuxième demi-bras (16) autour dudit troisième axe (C) dans le sens opposé à et à la moitié de la vitesse angulaire de la rotation du deuxième demi-bras (16) autour du deuxième axe (B).

2. Dépalettiseur selon la revendication 1, **caractérisé en ce que** ledit bras articulé (11) de type pantographe comprend un mécanisme d'actionnement (22) permettant faire tourner le premier demi-bras (15), sur commande, autour du premier axe (A) de rotation.

3. Dépalettiseur selon l'une quelconque des revendications 1 ou 2, **caractérisé en ce que** lesdits premier (15) et deuxième (16) demi-bras sont positionnés horizontalement l'un sur l'autre, et ledit premier axe (A) de rotation est vertical.

4. Dépalettiseur selon l'une quelconque des revendications précédentes, **caractérisé en ce que** ledit premier demi-bras (15) comprend une poutre de support (18) articulée sur l'élément de support (10) par une broche traversante cylindrique (19) s'étendant, coaxialement avec ledit premier axe (A), au travers du corps de la poutre de support (18) et de l'élément de support (10) ; ladite broche cylindrique (19) étant adaptée fermement à une extrémité de ladite poutre de support (18), et étant adaptée d'une manière rotative au corps dudit élément de support (10).

5. Dépalettiseur selon l'une quelconque des revendications précédentes, **caractérisé en ce que** ledit deuxième demi-bras (16) comprend une poutre de support (20) articulée sur le corps (18) du premier demi-bras (15) par une broche traversante cylindrique (21) s'étendant, coaxialement avec ledit deuxième axe (B), au travers du corps de la poutre de support (20) et du corps (18) du premier demi- bras (15) ; ladite broche cylindrique (21) étant adaptée fermement à une extrémité de ladite poutre de support (20), et étant adaptée de manière rotative au corps (18) du premier demi-bras (15) ; ladite broche de fixation (40) étant adaptée pour tourner à l'intérieur de ladite poutre de support (20).

6. Dépalettiseur selon la revendication 5, **caractérisé en ce que** ledit premier engrenage en cascade (17) comprend une poulie dentée principale (30) adaptée de manière rotative à la broche cylindrique (19) dudit premier demi-bras (15), une poulie dentée secondaire (31) adaptée fermement à l'extrémité de la broche cylindrique (21) dudit deuxième demi-bras (16), et une courroie d'entraînement dentée (32) enroulée autour desdites poulies dentées principale (30) et secondaire (31) ; la poulie dentée principale (30) étant fixée fermement à l'élément de support (10) et ayant un diamètre extérieur qui est deux fois celui de ladite poulie dentée secondaire (31).

7. Dépalettiseur selon l'une quelconque des revendications 5 ou 6, **caractérisé en ce que** ledit deuxième engrenage en cascade (50) comprend une poulie dentée principale (51) adaptée de manière rotative à la broche cylindre (21) dudit deuxième demi-bras (16), une poulie dentée secondaire (52) adaptée fermement à l'extrémité de ladite broche de fixation (40), une courroie d'entraînement dentée (53) entourant lesdites poulies dentées principale (51) et secondaire (52), et un engrenage réducteur (54) permettant de transmettre la rotation de la broche cylindrique (21) _dudit deuxième demi-bras (16) autour dudit deuxième axe (B) à la poulie dentée principale (51) avec un rapport d'engrenage donné.

8. Dépalettiseur selon l'une quelconque des revendications précédentes, **caractérisé en ce qu'**il comprend également une surface d'accumulation de produits (5) le long de ladite plate-forme de chargement (4) ; et une tête de déchargement (7) permettant de retirer successivement un nombre prédéterminé de rangées de produits (2b) de la partie supérieure de la palette (2) sur la plate-forme de chargement (4), puis de déposer les rangées de produits (2b) sur la surface d'accumulation de produits (5).

9. Dépalettiseur selon l'une quelconque des revendications précédentes, **caractérisé en ce que** lesdits moyens de préhension (7, 12) fixés au bras articulé de type pantographe (11) comprennent un élément de préhension (12) permettant de saisir les plateaux ou panneaux de support (2c) faisant partie de chaque couche de ladite palette (2).
